(19) Europäisches Patentamt
European Patent Office
Office européen des brevets

(11) **EP 4 365 603 A1**

(12) **EUROPEAN PATENT APPLICATION**

(43) Date of publication:
**08.05.2024 Bulletin 2024/19**

(21) Application number: **23204864.5**

(22) Date of filing: **20.10.2023**

(51) International Patent Classification (IPC):
**G01P 15/125** (2006.01)     **G01P 15/097** (2006.01)
**G01P 15/08** (2006.01)

(52) Cooperative Patent Classification (CPC):
**G01P 15/125;** G01P 2015/0814; G01P 2015/0857;
G01P 2015/0871

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022   IT 202200022782**

(71) Applicant: **STMicroelectronics S.r.l.
20864 Agrate Brianza (MB) (IT)**

(72) Inventors:
• **RIANI, Manuel
22100 Como (IT)**
• **GATTERE, Gabriele
21040 Castronno (VA) (IT)**
• **RIZZINI, Francesco
25050 Passirano (BS) (IT)**

(74) Representative: **Studio Torta S.p.A.
Via Viotti, 9
10121 Torino (IT)**

(54) **MEMS DEVICE HAVING IMPROVED DETECTION PERFORMANCES**

(57)     The MEMS device (20) is formed by a substrate (21) and a movable structure (22) suspended on the substrate. The movable structure has a first mass (28), a second mass (29A) and a first elastic group (30A) mechanically coupled between the first and the second masses. The first elastic group is compliant along a first direction (Y). The first mass is configured to move with respect to the substrate along the first direction. The MEMS device also has a second elastic group (23) mechanically coupled between the substrate and the movable structure and compliant along the first direction; and an anchoring control structure (33A, 40A) fixed to the substrate, capacitively coupled to the second mass and configured to exert an electrostatic force on the second mass along the first direction. The anchoring control structure controls the MEMS device in a first operating state, wherein the second mass is free to move with respect to the substrate along the first direction, and in a second operating state, wherein the anchoring control structure applies a pull-in force on the second mass which anchors the second mass to the anchoring control structure.

FIG. 1

**Description**

Technical field

The present invention relates to a MEMS device, in particular an inertial sensor, having improved detection performances.

Background

As known, inertial sensors, such as accelerometers and gyroscopes, of the MEMS ("Micro Electro-Mechanical Systems") type are widely spread owing to the small dimensions and high detection sensitivity.

The MEMS inertial sensors are integrated into a wide range of electronic apparatuses, such as wearable devices, smartphones, laptops, etc.

Common applications of such inertial sensors include shock monitoring, for example to detect car accidents or possible falls to the ground of a person; the detection of gestures by a user, such as a rotation of the screen of a smartphone or a specific type of user touch; and use as bone conductivity detectors, for example as a microphone in True Wireless Stereo (TWS) headphones.

With particular reference to MEMS accelerometers, low-G accelerometers are currently known for detecting low accelerations, for example having a Full Scale Range (FSR) equal to 16 g or 32 g, and high-G sensors for detecting high accelerations, for example having a full scale range equal to 128 g.

It is also known that the FSR and the measurement sensitivity (i.e. the displacement of the movable detection structure of the inertial sensor per unit of applied acceleration) are inversely proportional to each other. Thus, high-G sensors have high FSR but low sensitivity and low-G sensors have low FSR but high sensitivity.

According to one approach, two movable detection structures separate from each other are integrated in a same MEMS device, so as to detect both low accelerations and high accelerations.

However, the simultaneous presence in the same MEMS device of two different movable detection structures entails disadvantages such as a greater number of necessary pads and a greater complexity in the required control circuitry (for example, dedicated ASICs, PCBs or CPUs, etc.), and more generally a greater integration area, a lower portability of the electronic device and a higher manufacturing cost.

The aim of the present invention is to overcome the disadvantages of the prior art.

Summary

According to the present invention, a MEMS device and a method for controlling the MEMS device are therefore provided, as defined in the attached claims.

Brief Description of the Drawings

For a better understanding of the present invention, some embodiments thereof are now described, purely by way of non-limiting example, with reference to the attached drawings, wherein:

- Figure 1 shows a top-plan view of the present MEMS device, according to an embodiment;
- Figure 1A shows a top-plan view of an enlarged portion of the MEMS device of Figure 1;
- Figure 2 shows a top-plan view of the MEMS device of Figure 1, in an operating condition;
- Figure 2A shows a top-plan view of the enlarged portion of the MEMS device of Figure 1, in the operating condition of Figure 2;
- Figure 3 shows a top-plan view of the present MEMS device, according to a different embodiment;
- Figure 4 shows a top-plan view of the MEMS device of Figure 3, in an operating condition;
- Figure 5 shows a top-plan view of the present MEMS device, according to a further embodiment; and
- Figure 6 shows a top-plan view of the MEMS device of Figure 5, in an operating condition.

Description of the Embodiments

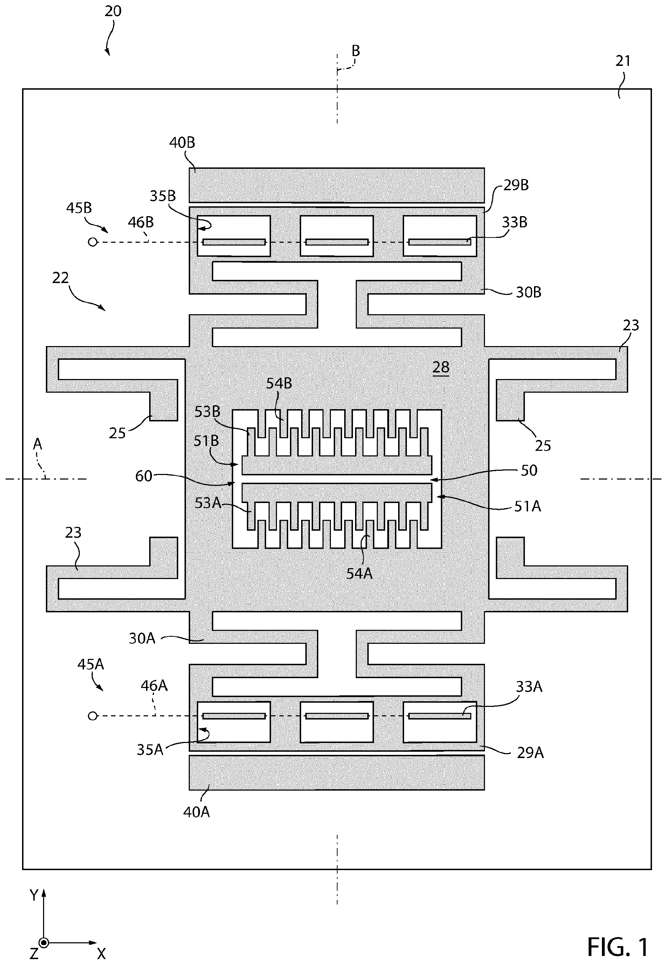

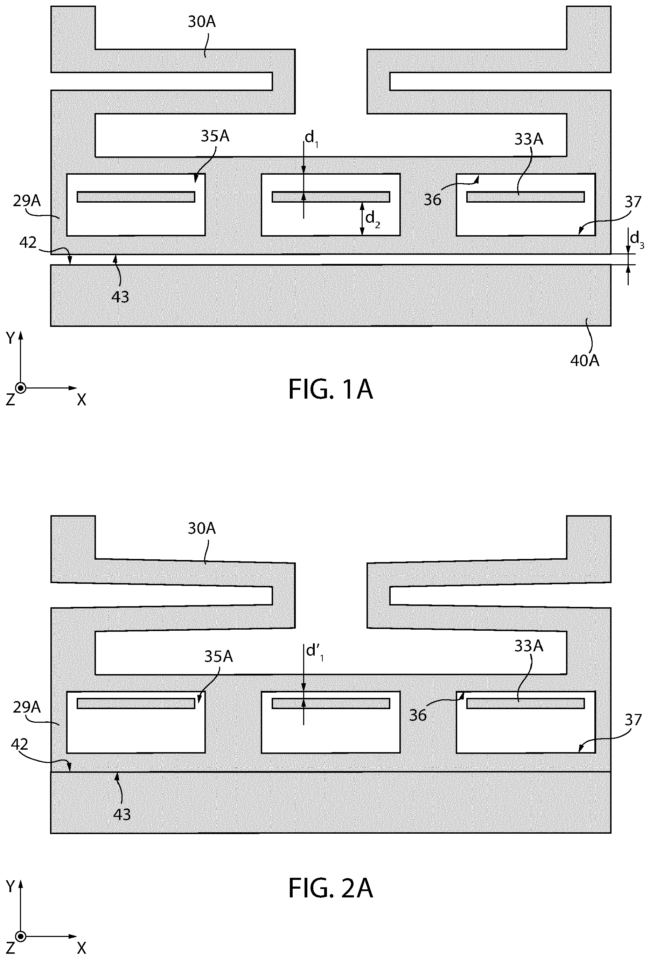

Figure 1 shows a MEMS device 20, in particular a uniaxial MEMS accelerometer, in a Cartesian reference system XYZ comprising a first axis X, a second axis Y and a third axis Z.

In Figure 1 only the elements useful for understanding the present embodiment are illustrated, and elements or components are not shown which, although present in the final MEMS device, are not relevant for the present invention.

The MEMS device 20 is formed by micromachining techniques from a body of semiconductor material, for example silicon.

In the embodiment shown, the MEMS device 20 has a first and a second axis of symmetry A, B parallel to the first and, respectively, the second axis X, Y.

The MEMS device 20 comprises a substrate 21, a movable structure 22 suspended on the substrate 21, and one or more elastic support elements, here four elastic support elements 23, which mechanically couple the movable structure 22 to the substrate 21.

The movable structure 22 and the elastic support elements 23 are formed starting from layers of semiconductor material, for example silicon or polysilicon, and form substantially planar structures having main extension in an XY plane.

The elastic support elements 23 and the movable structure 22 extend at a distance from the substrate 21 along the third axis Z.

The elastic support elements 23 are folded flexures and are configured to allow a movement of the movable structure 22 according to one or more degrees of freedom, here along a detection direction parallel to the second axis Y.

In detail, the elastic support elements 23 each extend between a respective anchoring region 25, fixed to the substrate 21, and the movable structure 22.

The movable structure 22 comprises a detection mass 28, a first and a second control mass 29A, 29B, and first and second elastic coupling elements 30A, 30B which mechanically couple the first control mass 29A and, respectively, the second control mass 29B, to the detection mass 28.

The first and the second elastic coupling elements 30A, 30B are folded flexures configured to deform along one or more directions, here parallel to the second axis Y.

The first and the second elastic coupling elements 30A, 30B may have, along the detection direction, an equal or different elastic constant, here different and in particular greater, with respect to that of the elastic support elements 23.

In detail, the first control mass 29A extends on a first side of the detection mass 28 and the second detection mass 29B extends on a second side of the detection mass 28 opposite to the first side with respect to the first axis of symmetry A.

The first elastic coupling elements 30A extend, parallel to the second axis Y, between the first control mass 29A and the detection mass 28. The second elastic coupling elements 30B extend, parallel to the second axis Y, between the second control mass 29B and the detection mass 28.

The MEMS device 20 further comprises first and second control electrodes 33A, 33B, fixed to the substrate 21 and capacitively coupled to the first and, respectively, the second control mass 29A, 29B.

The first and the second control electrodes 33A, 33B are formed from semiconductor material, for example silicon or polysilicon.

The first and the second control electrodes 33A, 33B are configured to cause a displacement of the first and, respectively, the second control mass 29A, 29B, along the detection direction.

In detail, three first through-cavities 35A extend through the first control mass 29A, throughout the thickness of the first control mass 29A along the third axis Z, and three second through-cavities 35B extend through the second control mass 29B, throughout the thickness of the second control mass 29B along the third axis Z.

The first and the second control masses 29A, 29B have, for each of the respective through-cavities 35A, 35B, a first and a second inner wall 36, 37, as shown in detail in the enlarged view of Figure 1A for the first through-cavities 35A.

For each of the first and the second through-cavities 35A, 35B, the first inner wall 36 is arranged, parallel to the second axis Y, at a smaller distance from the detection mass 28 with respect to the second inner wall 37. In other words, the first inner walls 36 are arranged towards the center of the movable structure 22, and the second inner walls 37 are arranged towards the outside of the movable structure 22.

In this embodiment, with reference to the first through-cavities 35A, the first and the second inner walls 36, 37 extend parallel to the first axis X, on two sides of the first through-cavities 35A opposite to each other along the second axis Y.

The first control electrodes 33A are each arranged inside a respective first through-cavity 35A. The second control electrodes 33B are each arranged inside a respective second through-cavity 35B.

In detail, again with reference to the first control mass 29A for the sake of simplicity, the first control electrodes 33A extend, parallel to the second axis Y, at a distance $d_1$ from the first inner wall 36 and at a distance $d_2$ from the second inner wall 37.

The distance $d_1$, for example comprised between 1.8 $\mu$m and 5 $\mu$m, is smaller than the distance $d_2$.

For example, the distance $d_1$ may be greater than a stroke value of the MEMS device 20, i.e. greater than the maximum displacement that the movable structure 22 may undergo, in use, parallel to the second axis Y.

For example, the distance $d_2$ may be equal to the distance $d_1$ plus a factor that may be chosen as a function of the stroke value of the MEMS device 20, according to the specific application.

The MEMS device 20 further comprises a first and a second stopper 40A, 40B, fixed to the substrate 21 and extending at a distance from the first and, respectively, from the second control mass 29A, 29B parallel to the second axis Y.

In detail, with reference to the enlarged portion of Figure 1A, the first stopper 40A has a wall 42 facing an outer wall 43 of the first control mass 29A.

The outer wall 43 of the first control mass 29A extends, parallel to the second axis Y, at a distance $d_3$ from the wall 42 of the first stopper 40A.

The distance $d_3$ between the first control mass 29A and the first stopper 40A may be the same as or different, in particular here it is smaller, with respect to the distance $d_1$ between the first inner wall 36 of the first through-cavities 35A and the respective first control electrode 33A.

The distance $d_3$ may be greater than or equal to the stroke value of the MEMS device 20. In this embodiment, the distance $d_3$ is equal to the stroke value of the MEMS device 20 and thus defines the stroke value thereof.

Although not shown in detail, what has been described for the first stopper 40A and the first control electrodes 33A also applies to the second stopper 40B and the second control electrodes 33B.

The MEMS device 20 also comprises first and second voltage application means 45A, 45B, represented only schematically in Figure 1, comprising a first and, respectively, a second conductive track 46A, 46B which extend on the substrate 21 and are represented, for the sake of simplicity, by dashed lines in Figure 1.

For example, the first and the second voltage application means 45A, 45B may further comprise contact pads and bond wires and are configured to provide a control voltage to the first and, respectively, the second control electrodes 33A, 33B.

The MEMS device 20 further comprises a detection structure 50 of the capacitive type and configured to detect a movement of the detection mass 28 along the detection direction.

In the embodiment shown, the detection structure 50 comprises a first and a second detection capacitor 51A, 51B of the comb-finger type.

In detail, the first and the second detection capacitors 51A, 51B each comprise a plurality of stator electrodes 53A, 53B fixed to the substrate 21 and a plurality of rotor electrodes 54A, 54B integral with the detection mass 28. The stator electrodes 53A, 53B are interdigitated with respective rotor electrodes 54A, 54B.

In the embodiment shown, a cavity 60 extends, parallel to the third axis Z, through the detection mass 28, throughout the thickness of the detection mass 28. In practice, in the embodiment shown, the detection mass 28 has a frame shape. The stator electrodes 53A, 53B are arranged inside the cavity 60 and the rotor electrodes 54A, 54B are formed by protrusions of the detection mass 28 which extend towards the inside of the cavity 60.

In use, the MEMS device 20 is configured to detect an acceleration of the same MEMS device 20 along the detection direction, here parallel to the second axis Y.

The MEMS device 20 may be controlled in a sensitive operating state, or low-acceleration operating state, which may be used to detect low-acceleration values, for example up to 16 g or 32 g, and in a high-band operating state, or high-acceleration operating state, which may be used to detect high-acceleration values, for example up to 128 g, where g represents the earth's gravity acceleration value equal to about 9.81 m/s$^2$.

In the sensitive operating state, a zero voltage is applied to the first and the second control electrodes 33A, 33B. Therefore, in the sensitive operating state, the MEMS device 20 has, at equilibrium or at rest (for zero acceleration values), the configuration shown in Figure 1.

In the sensitive operating state, when the MEMS device 20 is subject to an acceleration along the detection direction, an inertial force parallel to the detection direction is applied on the movable structure 22. The inertial force causes a displacement of the movable structure 22 with respect to the equilibrium position.

In response to the displacement from the equilibrium position, an elastic return force acts on the movable structure 22. The elastic return force has opposite direction with respect to the inertial force.

In the sensitive operating state, the elastic return force is applied to the movable structure 22 by the elastic support elements 23. The modulus of the elastic return force is therefore a function of an elastic constant $k_1$ of the elastic support elements 23.

In practice, in the sensitive operating state, the movable structure 22 moves along the detection direction as a single body.

By neglecting, as a first approximation, the mass of the first and the second elastic coupling elements 30A, 30B, the movable structure 22 has an overall mass equal to M+2m, where M is the mass of the detection mass 28 and m the mass value of the first and the second control masses 29A, 29B. Consequently, the MEMS device 20 has, in the sensitive operating state, a resonance frequency $f_1$ given by $f_1 \propto \sqrt{k_1/(M + 2m)}$.

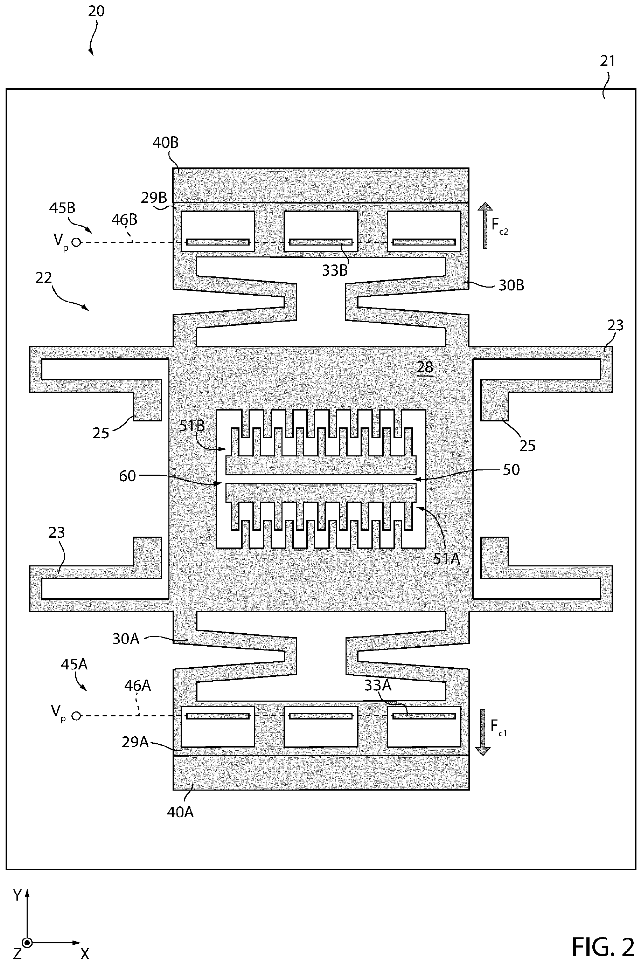

Figure 2 shows the MEMS device 20 at equilibrium or at rest (for zero acceleration values), in the high-band operating state.

In the high-band operating state, a voltage $V_p$ is applied to the first and the second control electrodes 33A, 33B through the first and the second voltage application means 45A, 45B.

In the following, the operation of the MEMS device 20 in the high-band operating state will be described with reference to the first control mass 29A, the first control electrodes 33A, the first stopper 40A and the first elastic coupling elements 30A. However, what will be described also applies to the second control mass 29B, the second control electrodes 33B, the second stopper 40B and the second elastic coupling elements 30B.

The voltage $V_p$ is greater than or equal to a pull-in voltage between the first control electrodes 33A and the respective first inner walls 36 of the first movable mass 29A.

In practice, the first control mass 29A and the first control electrodes 33A are, in the high-band operating state, in a pull-in condition.

The voltage $V_p$ generates an attractive electrostatic force between the first inner walls 36 of the first movable mass 29A and the first control electrodes 33A (arrow $F_{c1}$ of Figure 2). Since the first control electrodes 33A are fixed to the substrate 21, the voltage $V_p$ causes a displacement of the first control mass 29A towards the first control electrodes 33A.

As shown in detail in Figure 2A, at equilibrium, in the high-band operating state, the first inner wall 36 of the first through-cavities 35A is at a smaller distance $d'_1$ than the distance $d_1$ shown in Figure 1A relatively to the first operating state.

Again with reference to Figure 2, the voltage $V_p$ also causes the second movable mass 29B, in particular the respective first inner walls 36, to move towards the second control electrodes 33B (electrostatic force indicated by the arrow $F_{c2}$ of Figure 2).

In detail, in the embodiment shown, the electrostatic forces $F_{c1}$ and $F_{c2}$ are equal in modulus and have opposite directions; therefore, at equilibrium, in the absence of external accelerations, the elastic support elements 23 remain undeformed and the detection mass 28 does not undergo a displacement with respect to the rest position.

At equilibrium, the first elastic coupling elements 30A exert an elastic return force on the first control mass 29A (upwards in Figure 2). However, since the voltage $V_p$ is equal to or greater than the pull-in voltage, the elastic return force on the first control mass 29A is lower than the electrostatic attraction force $F_{c1}$ applied by the first control electrodes 33A on the first control mass 29A.

Thus, in the high-band operating state, in the absence of external accelerations, a resulting force directed towards the first and, respectively, the second stopper 40A, 40B, acts on the first and the second control masses 29A, 29B. The resulting force maintains the first and the second control masses 29A, 29B in contact with the first and, respectively, the second stopper 40A, 40B.

In practice, in the high-band operating state, the first and the second control masses 29A, 29B form further anchoring elements to the substrate 21 of the detection mass 28.

Furthermore, the voltage $V_p$ is such as to maintain the first control mass 29A and the first control electrodes 33A in the pull-in condition, and the second control mass 29B and the second control electrodes 33AB in the pull-in condition, even when the MEMS device 20 undergoes an acceleration along the detection direction.

Consequently, when the MEMS device 20 undergoes such acceleration, the corresponding inertial force applied to the movable structure 22 causes only the detection mass 28 to move.

In practice, even in the presence of an acceleration, the first and the second control masses 29A, 29B remain fixed (anchored) to the first and the second stoppers 40A, 40B and the detection mass 28 moves with respect to the first and the second control masses 29A, 29B.

For example, the MEMS device 20 may be configured to operate in the presence of an acceleration, along the detection direction, lower than or equal to a maximum expected acceleration value (for example determinable during the design step according to the specific application). With reference, by way of example, to the first control electrodes 33A and to the first control mass 29A, when the MEMS device 20 is subject, in use, to an acceleration equal to the maximum expected acceleration value, the detection mass 28 undergoes a maximum displacement with respect to the substrate 21 along the detection direction. The voltage $V_p$ may therefore be chosen in such a way that the corresponding pull-in force exerted by the first control electrodes 33A on the first control mass 29A is greater than the sum of the elastic return force exerted by the first elastic coupling elements 30A on the first control mass 29A in response to the maximum displacement of the detection mass 28, and of the apparent force experienced by the first control mass 29A in response to the maximum expected acceleration value of the MEMS device 20.

It follows that, in the high-band operating state, in the presence of an acceleration, the detection mass 28 undergoes an elastic return force which is a function not only of the elastic constant $k_1$ of the elastic support elements 23, but also of the elastic constant $k_2$ of the first and the second elastic coupling elements 30A, 30B.

In the high-band operating state, the first and the second elastic coupling elements 30A, 30B are mechanically arranged in parallel with the elastic support elements 23, between the detection mass 28 and the substrate 21.

Therefore, in the high-band operating state, the MEMS device 20, in particular the detection mass 28, has an equivalent elastic constant $k_{eq}$ which is a function of the sum of the elastic constants $k_1$, $k_2$.

By neglecting also here, as a first approximation, the mass of the first and the second elastic coupling elements 30A, 30B, the movable structure 22 has an overall mass equal to M, i.e. corresponding to the sole detection mass 28.

Consequently, the MEMS device 20 has, in the high-band operating state, a resonance frequency $f_2$ given by $f_2 \propto \sqrt{(k_1 + k_2)/M}$.

By suitably choosing the values of the elastic constants $k_1$, $k_2$ and of the masses M, m during the design step, the value of the resonance frequencies $f_1$, $f_2$ of the MEMS device 20 may be adjusted, and therefore the detection properties of the MEMS device 20 in the first and the second operating states.

In the embodiment shown, the resonance frequency $f_2$ is greater than the resonance frequency $f_1$.

Consequently, in the sensitive operating state, the MEMS device 20 has higher detection sensitivity with respect to the high-band operating state. In the high-band operating state, the MEMS device 20 has a greater full scale with respect to the sensitive operating state.

Thus, the MEMS device 20 may be used to detect both low acceleration values and high acceleration values.

Furthermore, in the MEMS device 20, with reference to Figure 1A, the fact that, at rest, the distance $d_3$ between the first control mass 29A and the first stopper 40A is smaller than the distance $d_1$ between the first inner wall 36 and the first control electrodes 33A, causes the first control mass 29A to be anchored to the first stopper 40A and not to collide with the first control electrodes 33A in the pull-in condition. This allows a short circuit between the first wall 36 and the first electrodes 33A to be avoided.

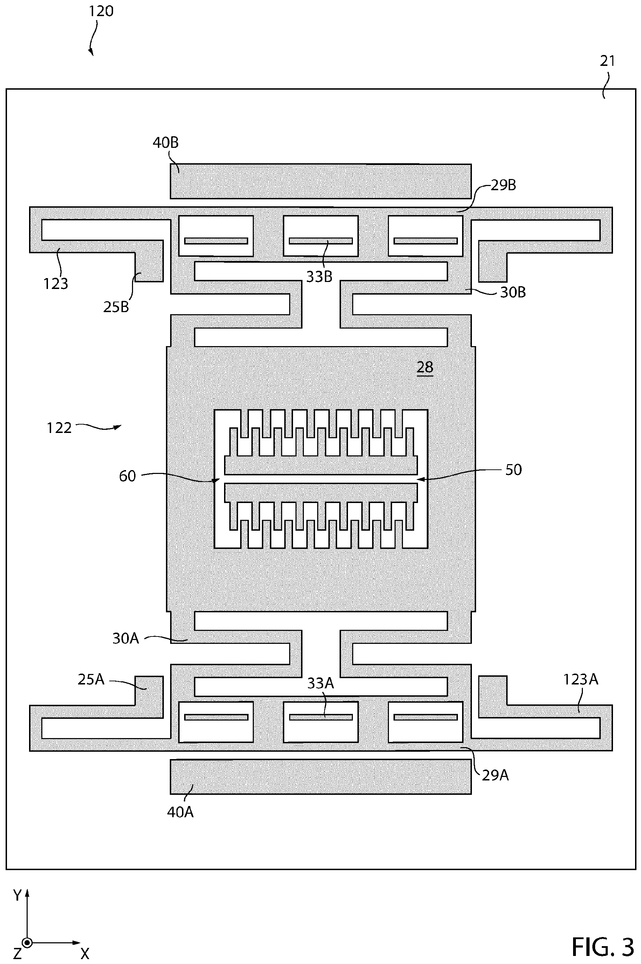

Figure 3 shows a different embodiment of the present MEMS device, indicated here by 120. The MEMS device 120 has a general structure similar to that of the MEMS device 20 of Figure 1; consequently, elements in common are indicated by the same reference numerals and are not further described.

In detail, the MEMS device 120 comprises the substrate 21, a movable structure 122, and elastic support elements, in particular first and second elastic support elements 123A, 123B, which mechanically couple the movable structure 122 to the substrate 21.

Also in this embodiment, the movable structure 122 comprises the detection mass 28, the first and the second control masses 29A, 29B, and the first and the second elastic coupling elements 30A, 30B.

In the MEMS device 120, the first and the second elastic support elements 123A, 123B are coupled to the first and, respectively, the second control mass 29A, 29B.

In detail, the first elastic support elements 123A each extend between a respective anchoring region 25A and the first control mass 29A, and the second elastic support elements 123B each extend between a respective anchoring region 25B and the second control mass 29B.

In practice, in the MEMS device 120 of Figure 3, the first and the second elastic support elements 123A, 123B are mechanically arranged in series with the first and, respectively, the second elastic coupling elements 30A, 30B, between the detection mass 28 and the substrate 21.

The MEMS device 120 further comprises also the first and the second control electrodes 33A, 33B, the first and the second stoppers 40A, 40B and the detection structure 50.

The MEMS device 120 also comprises voltage application means, not shown here, which allow a voltage to be applied to the first and the second control electrodes 33A, 33B, as discussed with reference to Figure 1.

Similarly to what has been discussed for the MEMS device 20 of Figure 1, also the MEMS device 120 has a sensitive operating state, configured to detect low acceleration values, and a high-band operating state, configured to detect high acceleration values.

In the sensitive operating state (Figure 3), a lower voltage than the pull-in voltage, in particular a zero voltage, is applied between the first and the second control electrodes 33A, 33B and the first and the second control masses 29A, 29B.

In the first operating state, the MEMS device 20, in particular the detection mass 28, has an equivalent elastic constant $k_{eq} = k_1 \cdot k_2 / (k_1 + k_2)$ .

By neglecting, as a first approximation, the mass of the first and the second elastic coupling elements 30A, 30B, the movable structure 122 has, also here, an overall mass equal to M+2m. Consequently, the MEMS device 120 has, in the sensitive operating state, a resonance frequency $f_1$ given by

$$f_1 \propto \sqrt{k_{eq}/(M + 2m)}$$ .

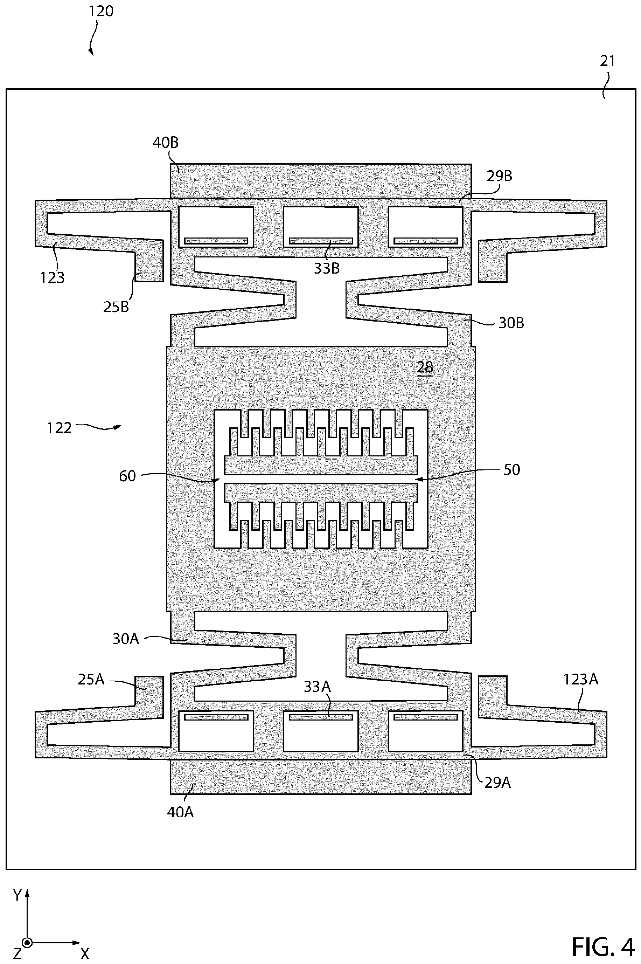

In the high-band operating state (Figure 4), the voltage $V_p$ is applied between the first control electrodes 33A and the first control mass 29A and between the second control electrodes 33B and the second control mass 29B, similarly to what has been discussed with reference to Figure 2.

In the presence of an acceleration, the first and the second control masses 29A, 29B remain in contact with the first and, respectively, with the second stopper 40A, 40B; and the detection mass 28 moves with respect to the equilibrium position. In practice, also here, in the pull-in condition, the first and the second masses 29A, 29B are electrostatically fixed (anchored) to the first and, respectively, to the second stopper 40A, 40B.

Consequently, in the presence of the external acceleration, only the first and the second elastic coupling elements 30A, 30B exert an elastic return force on the detection mass 28.

In practice, the equivalent elastic constant $k_{eq}$ of the MEMS device 120 is equal to the elastic constant $k_2$ of the first and second elastic coupling elements 30A, 30B.

Consequently, the MEMS device 120 has, in the high-band operating state, a resonance frequency $f_2$ given by $$f_2 \propto \sqrt{k_2/M}$$ .

In practice, the MEMS device 120 may also have both a high sensitivity and a high full scale.

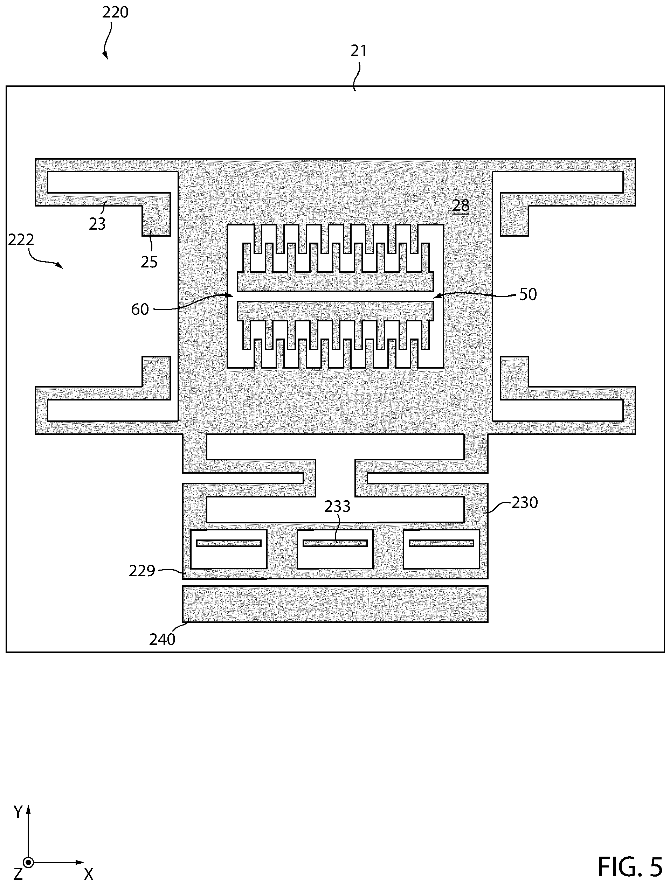

Figure 5 shows a further embodiment of the present MEMS device, indicated here by 220. The MEMS device 220 has a general structure similar to that of the MEMS device 20 of Figure 1; consequently, elements in common are indicated by the same reference numerals and are not further described.

In detail, the MEMS device 220 comprises the substrate 21, a movable structure 222 and the elastic support elements 23.

In this embodiment, the movable structure 222 is formed by the detection mass 28, a control mass 229 and one or more elastic coupling elements, here two elastic coupling elements 230.

The control mass 229 and the elastic coupling elements 230 are respectively equal to the first control mass 29A and the first elastic coupling elements 30A of the MEMS device 20.

The MEMS device 220 further comprises a plurality of control electrodes 233 and a stopper 240, which are respectively equal to the first control electrodes 33A and the first stopper 40A of the MEMS device 20 of Figure 1.

In practice, with respect to the MEMS device 20 of Figure 1, the MEMS device 220 does not have the second control mass, the second elastic coupling elements, the second stopper and the second control electrodes.

In other words, the MEMS device 220 is not symmetrical parallel to the first X axis.

The operation of the MEMS device 220 is similar to the operation of the MEMS devices 20, 120 of Figures 1 and 3 and will therefore not be further described in detail.

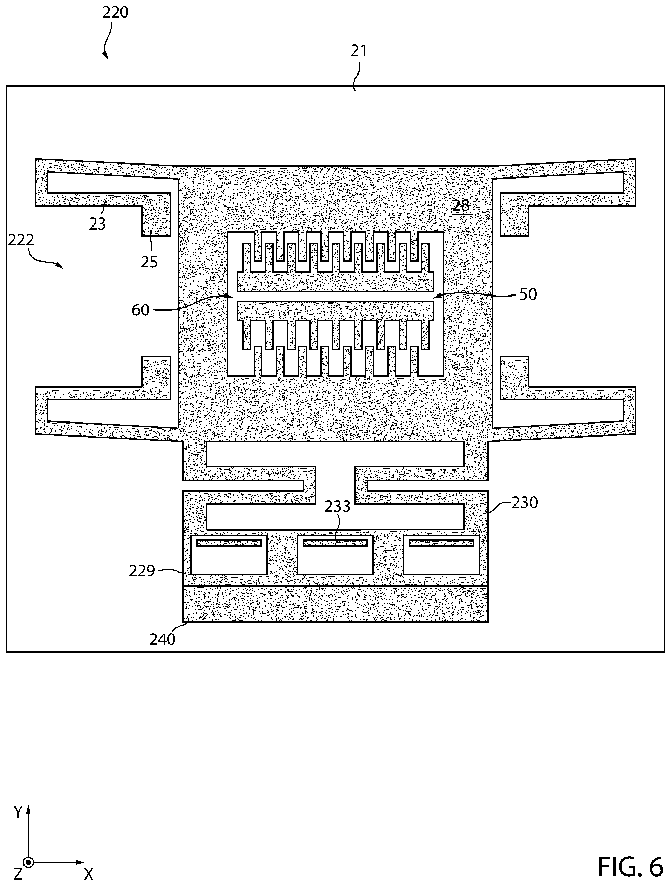

Figure 6 shows the MEMS device 220 in the high-band operating state, where the control electrodes 233 and the control mass 229 are in a pull-in condition.

Consequently, in the sensitive operating state (Figure 5), the equivalent elastic constant of the MEMS device 220 is a function of the elastic constant of the elastic support elements 23. In the high-band operating state (Figure 6), the equivalent elastic constant of the MEMS device 220 is a function of the elastic constant of both the elastic support elements 23 and the elastic coupling elements 230.

Therefore, also the MEMS device 220 has a high detection versatility and may detect both high and low acceleration values.

Furthermore, the MEMS device 220 has a low die area occupation and may therefore have a low manufacturing cost.

Finally, it is clear that modifications and variations may be made to the MEMS devices 20, 120, 220 described and illustrated herein without thereby departing from the scope of the present invention, as defined in the attached claims.

For example, the elastic support elements, the anchoring regions, the stoppers, the elastic coupling elements, the through-cavities of the control masses, etc. may be different in number and shape from what has been described and illustrated herein.

For example, the elastic support elements and the elastic coupling elements may be flexures of different type, for example linear flexures.

The detection structure 50 may comprise a different number of detection capacitors and/or the detection capacitors may be of different type, for example parallelplate capacitors.

Alternatively, the MEMS device may be based on a detection principle other than the capacitive one. For example, the detection structure 50 may be configured to detect a movement of the detection mass 28 according to a piezoelectric or piezoresistive detection principle.

For example, the control electrodes may be used to control the MEMS device in a number of operating states greater than two. For example, a voltage other than zero and lower than the pull-in voltage may be applied to the control electrodes, which allows the elastic constant of the elastic support elements and/or of the elastic coupling elements to be modified due to the known phenomenon of the electrostatic softening.

Additionally or alternatively, with reference to the MEMS devices 20, 120, voltages that are different from each other may be applied to the first and the second control electrodes, according to the specific application. For example, the pull-in voltage may only be applied to the first control electrodes or to the second control electrodes.

For example, the present MEMS device may be a biaxial or triaxial accelerometer. In this case, the movable structure may be configured to move along one or more directions. Alternatively, the MEMS device may comprise multiple movable structures, suitably configured to each detect an acceleration along a respective axis.

Furthermore, the MEMS device may be an inertial sensor other than an accelerometer, for example a gyroscope, or a MEMS sensor of a different type, configured to detect a physical quantity on the basis of a movement of a movable structure.

Finally, the described embodiments may be combined to form further solutions.

## Claims

1. A MEMS device (20; 120; 220) comprising:

    a substrate (21);
    a movable structure (22; 122; 222) suspended on the substrate and comprising a first mass (28), a second mass (29A, 29B; 229) and a first elastic group (30A, 30B; 230) mechanically coupled between the first and the second masses, the first elastic group being compliant along a first direction (Y), the first mass being configured to move with respect to the substrate along the first direction;
    a second elastic group (23; 123A, 123B) mechanically coupled between the substrate and the movable structure, the second elastic group being compliant along the first direction; and
    an anchoring control structure (33A, 40A, 33B, 40B; 233, 240) fixed to the substrate, capacitively coupled to the second mass (29A, 29B; 129) and configured to exert an electrostatic force on the second mass along the first direction,
    wherein the anchoring control structure is configured to control the MEMS device in a first operating state, wherein the second mass is free to move with respect to the substrate along the first direction, and in a second operating state, wherein the anchoring control structure applies a pull-in electrostatic force on the second mass such as to anchor the second mass to the anchoring control structure, thereby preventing a movement of the second mass with respect to the substrate in response to a movement of the first mass.

2. The MEMS device according to the preceding claim, wherein the anchoring control structure comprises a stopper (40A, 40B; 240) fixed to the substrate, the stopper extending at rest, in the first operating state, at a first distance ($d_3$) from the second mass along the first direction, and, in the second operating state, in contact with the second mass.

3. The MEMS device according to the preceding claim, wherein the anchoring control structure further comprises a control electrode (33A, 33B; 233) fixed to the substrate (21) and extending, at rest, in the first operating state, at a second distance ($d_1$) from the second mass (29A, 29B) along the first direction.

4. The MEMS device according to the preceding claim, wherein the first distance is smaller than the second distance.

5. The MEMS device according to any of the preceding claims, wherein the anchoring control structure comprises a control electrode (33A, 33B; 233), the second mass having an outer wall (43) and a through-cavity (35A, 35B) having an inner wall (36), the control electrode being arranged inside the through-cavity facing the inner wall, the stopper facing the outer wall of the second mass.

6. The MEMS device (20; 220) according to any of the preceding claims, wherein the second elastic group (23) is coupled to the first mass (28), so that, in the first operating state, the first mass is coupled to the substrate through the second elastic group, and, in the second operating state, the first mass is coupled to the substrate through the first and the second elastic groups, the first and the second elastic groups being mechanically arranged in parallel between the first movable mass and the substrate.

7. The MEMS device (120) according to any of claims 1-5, wherein the second elastic group (123A, 123B) is coupled to the second mass (29A, 29B), so that, in the first operating state, the first mass is coupled to the substrate through the first and the second elastic groups, the first and the second elastic groups being mechanically arranged in series between the first movable mass and the substrate and, in the second operating state, the first mass is coupled to the substrate through the first elastic group.

8. The MEMS device according to any of the preceding claims, wherein the movable structure further comprises a third mass (29B) and a third elastic group (30B) which mechanically couples the first mass (28) to the third mass and which is compliant along the first direction, the second mass being arranged on a first side of the first mass and the third mass being arranged on a second side of the first mass other than the first side, wherein the anchoring control structure is a first anchoring control structure (33A, 40A), the MEMS device further comprising a second anchoring control structure (33B, 40B) fixed to the substrate, capacitively coupled to the third mass (29B) and configured to control the MEMS device in a third operating state wherein the third mass is free to move with respect to the substrate along the first direction, and in a fourth operating state, wherein the second anchoring control structure applies a pull-in electrostatic force on the third mass such as to anchor the third mass to the second anchoring control structure, thus preventing a movement of the third mass with respect to the substrate in response to a movement of the first mass.

9. The MEMS device according to any of the preceding claims, further comprising a detection structure (50) configured to detect a movement of the first mass (28) along the first direction (Y).

10. The MEMS device according to any of the preceding claims, wherein the first mass (28) is configured to move along the first direction in response to a movement of the MEMS device.

11. A method for controlling a MEMS device (20; 120; 220) comprising:

a substrate (21);
a movable structure (22; 122; 222) suspended on the substrate and comprising a first mass (28), a second mass (29A, 29B; 229) and a first elastic group (30A, 30B; 230) mechanically coupled between the first and the second masses, the first elastic group being compliant along a first direction (Y) and the first mass being configured to move with respect to the substrate along the first direction;
a second elastic group (23; 123A, 123B) mechanically coupled between the substrate and the movable structure, the second elastic group being compliant along the first direction; and
an anchoring control structure (33A, 40A, 33B, 40B; 233, 240) fixed to the substrate, capacitively coupled to the second mass (29A, 29B; 129) and configured to exert an electrostatic force on the second mass along the first direction, the anchoring control structure and the second mass having a pull-in voltage,
wherein the method comprises:

applying, between the anchoring control structure and the second mass, a voltage that is zero or lower than the pull-in voltage, so that the MEMS device is in a first operating state wherein the second mass is free to move with respect to the substrate along the first direction; and
applying, between the anchoring control structure and the second mass, a voltage equal to or greater than the pull-in voltage, such that the MEMS device is in a second operating state wherein the anchoring control structure applies a pull-in electrostatic force on the second mass such as to anchor the second mass to the anchoring control structure, thereby preventing a movement of the second mass with respect to the substrate in response to a movement of the first mass.

12. The control method according to the preceding claim, wherein the movable structure further comprises a third mass (29B) and a third elastic group (30B) which mechanically couples the first mass (28) to the third mass and which is compliant along the first direction, the second mass being arranged on a first side of the first mass and the third mass being arranged on a second side of the first mass other than the first side, wherein the anchoring control structure is a first anchoring control structure (33A, 40A), the MEMS device further comprising a second anchoring control structure (33B, 40B) fixed to the substrate, capacitively coupled to the third mass (29B) and configured to exert an electrostatic force on the second mass along the first direction, the second anchoring control structure and the second mass having a second pull-in voltage,
wherein the method further comprises:

applying, between the second anchoring control structure and the third mass, a voltage that is zero or lower than the second pull-in voltage, so that the MEMS device is in a third operating state wherein the third mass is free to move with respect to the substrate along the first direction; and
applying, between the second anchoring control structure and the third mass, a voltage equal to or greater than the second pull-in voltage, so that the MEMS device is in a fourth operating state wherein the second anchoring control structure applies a pull-in electrostatic force on the third mass such as to anchor the third mass to the second anchoring control structure, thereby preventing a movement of the third mass with respect to the substrate in response to a movement of the first mass.

FIG. 1

FIG. 1A

FIG. 2A

FIG. 2

FIG. 3

FIG. 4

FIG. 5

FIG. 6

Europäisches
Patentamt
European
Patent Office
Office européen
des brevets

# EUROPEAN SEARCH REPORT

Application Number

EP 23 20 4864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/400712 A1 (GATTERE ET AL) 24 December 2020 (2020-12-24) * abstract; claims 2,20; figures 2-4,6,9 * * paragraphs [0017] - [0022], [0036] - [0063], [0076] * | 1-12 | INV. G01P15/125 G01P15/097 G01P15/08 |
| A | US 5 914 553 A (ADAMS ET AL) 22 June 1999 (1999-06-22) * the whole document * | 1-12 | |

TECHNICAL FIELDS
SEARCHED (IPC)

G01P
B81B
B82B

The present search report has been drawn up for all claims

| Place of search | Date of completion of the search | Examiner |
|---|---|---|
| Munich | 23 February 2024 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4864

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2024

| Patent document cited in search report | | Publication date | Patent family member(s) | | Publication date |
|---|---|---|---|---|---|
| US 2020400712 | A1 | 24-12-2020 | CN | 112114163 A | 22-12-2020 |
| | | | CN | 212568844 U | 19-02-2021 |
| | | | EP | 3754343 A1 | 23-12-2020 |
| | | | US | 2020400712 A1 | 24-12-2020 |
| | | | US | 2023184806 A1 | 15-06-2023 |
| US 5914553 | A | 22-06-1999 | NONE | | |

EPO FORM P0459

For more details about this annex : see Official Journal of the European Patent Office, No. 12/82